# EUROPÄISCHE PATENTSCHRIFT

(11) **EP 2 157 194 B1**
(45) Veröffentlichungstag und Bekanntmachung des Hinweises auf die Patenterteilung: **12.10.2011**
(21) Anmeldenummer: 09009704.9
(22) Anmeldetag: 28.07.2009
(51) Int. Cl.: C21D 1/25, C21D 1/42, C21D 8/06, C21D 8/10, C21D 9/00, B21B 1/16, B21B 1/20

(54) **Verfahren und Anlage zum Inline-Umformen, -Vergüten und -Richten von stabförmigen Metallteilen**
Method and assembly for inline reforming, treatment and alignment of rod-shaped metal parts
Procédé et installation de déformage, de traitement et d'alignement en ligne de pièces métalliques en forme de tiges

(30) Priorität: 02.08.2008 DE 102008036237
(43) Veröffentlichungstag der Anmeldung: 24.02.2010
(73) Patentinhaber: GMT-Gesellschaft für Metallurgische Technologie- und Softwareentwicklung mbH, 13086 Berlin (DE)
(72) Erfinder: Borowikow, Alexander, Dr.-Ing., 16230 Sydower Fliess OT Grüntal (DE); van Hüllen, Peter, Dipl.-Ing., 49479 Ibbenbüren (DE)

(56) Entgegenhaltungen:
- EP-A1- 0 842 715
- EP-A2- 0 904 860
- DE-B3- 10 315 418
- DE-C1- 19 546 204
- DE-T2- 60 004 233
- GB-A- 2 289 231
- JP-A- 56 114 504
- A. Borowikow et al.: "Modell zur Gefüge und Eigenschaftsberechnung für online und offline Anwendungen" GMT 2006, XP002560132 Gefunden im Internet: URL:http://www.gmt-engineering.de/informat ion/veroeffentlichungen/Online_Modell_rev7 .pdf>

## Beschreibung

Die Erfindung betrifft ein Verfahren und eine Anlage zum Inline-Umformen, -Vergüten und -Richten von stabförmigen Metallteilen, die beispielsweise als Ausgangsmaterial für die Herstellung hochbelasteter Bauteilkomponenten im Kraftfahrzeugbau oder im Maschinenbau eingesetzt werden.

Vorzugsweise im Automobilbau werden Bauteilkomponenten benötigt, die bei ihrem Einsatz z.B. als Antriebs- oder Getriebewellen, Zahnstangen oder Stoßdämpferstangen hohen dynamischen Beanspruchungen ausgesetzt sind. Als Ausgangsmaterial für die Herstellung dieser Fahrzeugkomponenten werden in der Regel geschmiedete oder warmgewalzte Stäbe verwendet, die in nachfolgenden spangebenden Fertigungsschritten, wie Fräsen und/oder Schleifen, ihre einbaufertige Kontur erhalten. Um dem spezifischen Anforderungsprofil dieser Bauteile durch vorwiegend dynamische Belastungen möglichst optimal zu begegnen, werden Vergütungsstähle als Ausgangsmaterial eingesetzt, die zur Herausbildung ihrer typischen Eigenschaftsmerkmale, einer Kombination aus hohen Festigkeitswerten bei gleichzeitig guter Zähigkeit, einer geeigneten Wärmebehandlung, dem Vergüten, unterzogen werden müssen. Der klassische Vergütungsprozess beinhaltet die Erwärmung des Stahls auf eine Temperatur im Austenitbereich, das Abschrecken in Luft, Öl oder Wasser auf Raumtemperatur, erneute Erwärmung auf Anlasstemperatur und nachfolgende Abkühlung z.B. auf einem Kühlbett. Die Zielstellung des Vergütens besteht darin, das Verhältnis von Festigkeit und Zähigkeit so zu verbessern, dass nicht zwangsläufig eine Verbesserung der Festigkeit zu einer gleichstarken Abnahme der Zähigkeitseigenschaften führt. Die gleichzeitige Verbesserung beider mechanischer Werte ist eine unmittelbare Folge der durch Vergütung erzielten starken Komverfeinerung und der gleichmäßigen Verteilung der Gefügebestandteile. Bedingt durch die Warmformgebung und die Wärmebehandlung weist das Ausgangsmaterial für die Herstellung der Bauteilkomponenten Eigenspannungen auf, die zu Verzugserscheinungen über die Längsachse der Stäbe und zu einer Verminderung ihrer Rundlaufeigenschaften führen können. Stäbe mit Verzugserscheinungen erfüllen somit nicht die steigenden Anforderungen hinsichtlich Geradheit und Rundlaufgenauigkeit bei der Endbearbeitung auf schnelllaufenden Dreh-, Fräs- oder Schleifautomaten. Sie müssen am Ende einer mehrstufigen Fertigungsfolge als Ausschuss deklariert und aus dem Fertigungsprozess ausgegliedert werden. Aus der Praxis sind auf Grund dieser Erscheinungen beträchtliche Ausschussraten bekannt. Angesichts der hohen Materialkosten und der bis zu diesem Zeitpunkt aufgewendeten Fertigungs- und Energiekosten sind damit erhebliche wirtschaftliche Verluste verbunden.

Um die Ausschussquote bei der Herstellung hochwertiger Fahrzeugkomponenten zu vermindern bzw. ganz auszuschließen, ist es also vorteilhaft, die warmgewalzten und wärmebehandelten Ausgangsstäbe vor der spangebenden Endbearbeitung einem Richtprozess zu unterziehen.

In den entwickelten Industrieländern setzt sich aus Kostengründen zunehmend das Prinzip der "schlanken Produktion" durch, d.h., mehrere Verfahrensschritte werden in einer Fertigungskette integriert, um einen kontinuierlichen Materialfluss vom Ausgangsmaterial bis zur Fertigbearbeitung zu gewährleisten. Mit der Integration mehrerer Verfahrensschritte in eine geschlossene Fertigungslinie strebt man eine Verkürzung der Prozessketten und eine Vereinfachung der Produktionslogistik an, um die Durchlaufzeiten zu senken, Kosten zu sparen und somit eine höhere Produktivität bei verbesserten Produkteigenschaften zu erreichen.

Aus der Fachliteratur und aus der Praxis sind erste Beispiele bekannt, in denen einzelne Verfahrensschritte miteinander verkettet oder in bestehende Fertigungslinien eingebunden werden.

So beschreibt die DE 101 39 639 A1 einen Wärmebehandlungsprozess mit mehreren Arbeitsschritten, wie beispielsweise Erwärmen, Abschrecken und Anlassen, der technologisch und anlagentechnisch so ausgelegt ist, dass die komplette Wärmebehandlung in kompakte, automatisierte Fertigungsstraßen integriert werden kann. Durch Einbindung der Wärmebehandlung in die Produktionslinie zur Herstellung von z.B. Verzahnungs- und Lagerteilen wird die Anlagenproduktivität erhöht und die aufwendigen sowie mitunter zu Transportschäden führenden Transporte zwischen Fertigungsanlage und Wärmebehandlungsanlage können im Produktionsbetrieb entfallen.

Die Herstellung insbesondere statisch und dynamisch hochbelasteter Hohlwellen wird in der DE 198 34 133 C1 erläutert. Dabei werden Stahlrohre als Ausgangsmaterial mit minimalem logistischen Aufwand zu teilweise gehärteten Hohlwellen verarbeitet. Die mechanische Bearbeitung des aufgekohlten, jedoch noch weichen Ausgangsmaterials zu einem Werkstückrohling erfolgt durch spanende oder spanlose Formgebung in einer Ferägungslinie. Das anschließende induktive Härten des Werkstückrohlings kann auf Grund des relativ einfachen Anlagenaufwandes und der geringen Anforderungen an die Infrastruktur ohne weiteres in die Fertigungslinie der zerspanenden oder spanlosen Bearbeitung integriert werden.

Zielstellung der DE 197 43 802 C2 ist es, die Herstellung von metallischen Formbauteilen für Kraftfahrzeugkomponenten, welche Bereiche einer höheren Duktilität aufweisen, verfahrenstechnisch zu vereinfachen, effizienter und damit ökonomischer zu gestalten. Als Ausgangsmaterial dient Bandstahl, der in bedarfsgerechte Platinen geteilt wird. Durch induktive Erwärmung werden partielle Bereiche der Platine auf ca. 900 °C schnell erwärmt. Anschließend wird die wärmebehandelte Platine in einem Pressenwerkzeug zum gewünschten Formbauteil umgeformt. Nach dieser Umformung erfolgt eine Vergütung des Formbauteils direkt im Pressenwerkzeug.

Auf einen ähnlichen Sachverhalt zielt die DE 102 08 216 C1 ab. Auch hier geht es um die Herstellung von Formbauteilen für Kraftfahrzeugkomponenten, die jedoch im Unterschied zu o.g. Beispiel mindestens zwei Bereiche mit unterschiedlicher Duktilität aufweisen. Dabei wird ein Verfahren zur Herstellung eines metallischen Bauteiles mit mindestens zwei unterschiedlichen Gefügebereichen dahingehend weiterentwickelt, dass es für die Massenproduktion geeignet ist und zudem prozesssicher in einen vorhandenen Warmformprozess integriert werden kann. Der Bereich des Formbauteils, der im Endbauteil nur eine geringere Duktilität aufzuweisen braucht, wird nach Erwärmung auf Austenitisierungstemperatur einem Härteprozess zugeführt. Dieser erfolgt in einem gekühlten Umformwerkzeug, in dem die Ausgangsplatine eine Umformung unter gleichzeitiger Abkühlung erfährt.

In der Europäischen Patentschrift EP 0 753 587 B1 wird eine Vorrichtung zur Vergütung von Werkzeugstählen erläutert. Die Besonderheiten der Vorrichtung bestehen darin, dass in ihr Wärmebehandlungsöfen mit Richtpressen vorteilhaft verknüpft werden. Das zu behandelnde Gut wird in einem als Härteofen bezeichneten Ofen auf Austenitisierungstemperatur erwärmt. Diesem Ofen schließt sich eine Härtepresse an, in der das Behandlungsgut langsam und gezielt abgekühlt und gleichzeitig gerichtet wird. Danach gelangt das Gut in den Anlassofen, der eine Vorwärmzone und eine Temperaturhaltezone mit integrierter Richtpresse aufweist. Das Behandlungsgut wird in der Haltezone für eine bestimmte Zeit dem Druck der Richtpresse ausgesetzt. Nach dem Anlassen wird das Behandlungsgut einer unmittelbar dem Anlassofen nachgeschalteten Kühlpresse zugeführt, in der es in definierter Weise abgekühlt wird.

Und schließlich wird in der DE 37 43 444 A1 eine Technologie für Fein- und Mittelstahlwalzwerke vorgestellt, die darauf abzielt, die Umform- und Abkühlschritte so zu steuern, dass dabei Stabstahl mit verbesserten Festigkeit- und Plastizitätseigenschaften erzeugt werden kann. Der Gesamtprozess setzt sich aus mehreren exakt definierten Teilschritten der Anwärm-, Walz-, Zwischenkühl-, Fertigwalz- und Abkühltechnologie zusammen. Die strikte Einhaltung definierter Anwärmtemperaturen, vorgegebener Umformgrade in der 1.Umformstufe, Härtegefüge vermeidender Temperaturführung beim Zwischenkühlen, abgesenkter Endwalztemperaturen und vorbestimmter Temperaturfenster bei der Endabkühlung führt zur Ausbildung des beabsichtigten feinkörnigen Gefüges mit ferritisch-bainitischer Struktur. Eine besondere Rolle in dieser Technologie spielt die Auslegung des Zwischenkühlbettes, das zwischen den Gerüsten der ersten und zweiten Umformstufe angeordnet ist.

In der Patentschrift DE 103 15 418 B3 wird ein Verfahren zur thermomechanischen Behandlung von Stahl erwähnt. Das Ausgangsmaterial wird auf eine Temperatur oberhalb der Rekristallisationstemperatur aufgeheizt, austenitisiert, temperaturausgleichend gehalten, danach mittels Walzen verformt, wobei nach Überschreitung des kritischen Umformgrades dynamische Rekristallisationsprozesse ablaufen und darauffolgend einer Nachwärmung oberhalb von Ac3 unterzogen wird, um abschliessend zu Martensit abgeschreckt, gehärtet und angelassen zu werden.

Die dem Stand der Technik zu entnehmenden Verfahren basieren im Wesentlichen auf Lösungsvorschlägen zur Integration einzelner technologischer Teilschritte in Fertigungslinien. Die größten Fortschritte konzentrieren sich dabei offenbar auf die Einbindung von Wärmebehandlungsstrategien bzw. Wärmebehandlungsanlagen in bestehende Prozessketten.

Der Erfindung liegt folglich die Aufgabe zugrunde, ein Verfahren und eine Anlage zur Herstellung stabförmiger Metallteile, die beispielsweise Ausgangspunkt für die Fertigung hochbelasteter Fahrzeugkomponenten sein können, bereitzustellen, bei dem alle notwendigen technologischen Behandlungsschritte vom Aufwärmen des Ausgangsmaterials auf Umformtemperatur über den Umformvorgang, den Vergütungsprozess, das Richten der wärmebehandelten Stäbe bis zur spanenden Endbearbeitung in einer geschlossenen Fertigungslinie integriert sind.

Diese Aufgabe wird durch ein Verfahren mit den Merkmalen des Patentanspruchs 1 gelöst.

Weitere vorteilhafte Ausgestaltungen des Verfahrens werden in den Ansprüchen 2 bis 13 erläutert.

Beim erfindungsgemäßen Verfahren werden als Ausgangsmaterial warmgewalzte, zunderfreie Stäbe aus Vergütungsstählen eingesetzt, die konventionelle Stabstahlstraßen in den handelsüblichen Durchmesserbereichen anbieten. Das Ausgangsmaterial wird induktiv auf Umformtemperatur aufgeheizt und nachfolgend einem Temperaturausgleich über die gesamte Stablänge unterzogen. Ferner wird die Aufheiztemperatur des Stabes bis zum Einlauf in den Walzspalt konstant gehalten. Damit wird sichergestellt, dass der Stab vor Eintritt in den Walzspalt ein möglichst homogenes Gefüge sowohl über seine gesamte Länge als auch über seinen Querschnitt aufweist und somit vorteilhafte Ausgangsbedingungen für den nachfolgenden Umformprozess gegeben sind. Erfindungsgemäß erfolgt die Formgebung durch Schrägwalzen in einem Umformschritt. Auf Grund der hohen Flexibilität des Schrägwalzprozesses hinsichtlich der Auswahl beliebiger Fertigdurchmesser, kann mit einem Stabeinlaufdurchmesser ohne zusätzlichen Aufwand ein breites Spektrum endkonturnaher Stabdurchmesser gefertigt werden. Verfahrensspezifisch bedingt zeichnen sich die schräggewalzten Stäbe durch ein dynamisch rekristallisiertes Feinkomgefüge aus, dass somit günstige Voraussetzungen für den nachfolgenden Vergütungsprozess aufweist.

Zur Ausbildung optimaler Eigenschaften, d. h., Einstellung einer dem späteren Verwendungszweck des Bauteils angepassten Festigkeit bei gleichzeitig guter Zähigkeit, werden die schräggewalzten Stäbe unmittelbar nach ihrem Austritt aus dem Walzgerüst unter Ausnutzung der Umformwärme einer Vergütungsbehandlung unterzogen. Diese beinhaltet die induktive Nachwärmung der Stäbe bei einer Temperatur oberhalb Ac3, nachfolgendes Abschrecken und Anlassen.

Sowohl die Aufwärmung als auch das Abschrecken der Stäbe erfolgen computergesteuert auf der Grundlage eines Prozessmodells. Dieses Prozessmodell berechnet ausgehend von der bekannten chemischen Analyse der zu vergütenden Stäbe die erforderlichen Aufheiz- und Abkühlbedirigungen, um die geforderten Stabeigenschaften zu erreichen. Im Ergebnis der Berechnung werden online die entsprechenden technologischen Vorgaben für die Austenitisierungstemperatur und für die Abschreckgeschwindigkeit ermittelt.

Die Abkühlung der angelassenen Stäbe auf Raumtemperatur erfolgt auf einem nachgeschalteten Kühlbett. Um die erforderliche Prozesssicherheit in der abschließenden spangebenden Endbearbeitung zu gewährleisten, werden die Stäbe in einem kontinuierlich arbeitenden Richtprozess, bevorzugt durch Stauchrichten, gerichtet. Nach Konfektionierung der gerichteten Stäbe werden diese zur Endbearbeitung automatisierten Fräs- und/oder Schleifeinrichtungen zugeführt.

Die Erfindung weist im Vergleich mit den aus dem Stand der Technik bekannten Fertigungsabläufen zur Herstellung stabförmiger hochbelasteter Fahrzeugkomponenten beträchtliche Vorteile auf. Im Ergebnis einer speziellen Auswahl und Kombination geeigneter Verfahrensschritte und verfahrensspezifischer Anlagen werden erfindungsgemäß alle notwendigen Bearbeitungsstufen vom Einsatz des Ausgangsmaterials bis zum Endprodukt in einer geschlossenen Inline-Fertigungskette zusammengefasst. Durch die Inline-Verkettung der Verfahrensabläufe werden die Prozessdurchlaufzeit verkürzt, die Produktionslogistik insgesamt verbessert und somit eine effizientere Arbeitsweise erreicht. Zudem weist der Prozessablauf erhebliche Energiesparpotenziale auf, weil Umformung und Wärmebehandlung gekoppelt werden und damit aus einer Aufwärmung heraus erfolgen.

Insbesondere durch die induktive Schnellerwärmung anstelle herkömmlicher Erwärmungsöfen, die induktive Auslegung der Vergütungsstufe und den Einsatz der Schrägwalztechnik werden kompakte Anlagenkomponenten in die Fertigungskette integriert, die zu einer erheblichen Verminderung des Platzbedarfes der Gesamtanlage führen und zudem schnelle Durchlaufgeschwindigkeiten ermöglichen. Damit wird die Fertigungskette auch für mittelständische Betriebe interessant, weil sie auf Grund ihres geringen Platzbedarfes in bestehende Produktionsstandorte eingebunden werden kann.

Besondere Vorteile ergeben sich aus der Formgebung des Ausgangsmaterials mittels Schrägwalzens. Die Flexibilität der Schrägwalztechnik schafft große Spielräume hinsichtlich der zu verarbeitenden Werkstoffpalette und sie ermöglicht darüber hinaus auch die Herstellung beliebiger Fertigdurchmesser aus einem Ausgangsdurchmesser.

Ein weiterer Vorteil des Verfahrens besteht darin, dass in Abhängigkeit von der chemischen Analyse des Ausgangsmaterials durch Optimierung der Aufheiz- und Abkühlbedingungen mittels des Prozessmodells belastungskonforme Eigenschaftswerte in den gewalzten und vergüteten Stäben gezielt eingestellt werden können.

Durch die Möglichkeit des endkontumahen Walzens wird das Aufmaß für die spangebende Endbearbeitung minimiert. Das führt zu einer Verminderung des teueren Zerspanungsvolumens, zur Verkürzung des Zerspanungsprozesses und damit letztendlich zu erheblichen Kosteneinsparungen. Da der Walzspalt beim Schrägwalzen ohne zusätzlichen Umrüstungsaufwand auf beliebige Fertigdurchmesser eingestellt werden kann, ist das Verfahren auch bei kleinen Serien sehr wirtschaftlich.

Auf Grund der kompakten Anlagenauslegung und der weitgehenden Unabhängigkeit von der gegebenen Infrastruktur ist die erfindungsgemäße Inline-Fertigungskette auch hinsichtlich der Auswahl eines wirtschaftlichen Standortes sehr flexibel. Die Anbindung der Fertigungskette an ein konventionelles Stabwalzwerk wäre ebenso sinnvoll wie der Betrieb derselben direkt in einem Unternehmen der Autozulieferindustrie.

Das erfindungsgemäße Verfahren wird nachfolgend anhand einer Zeichnung näher erläutert.

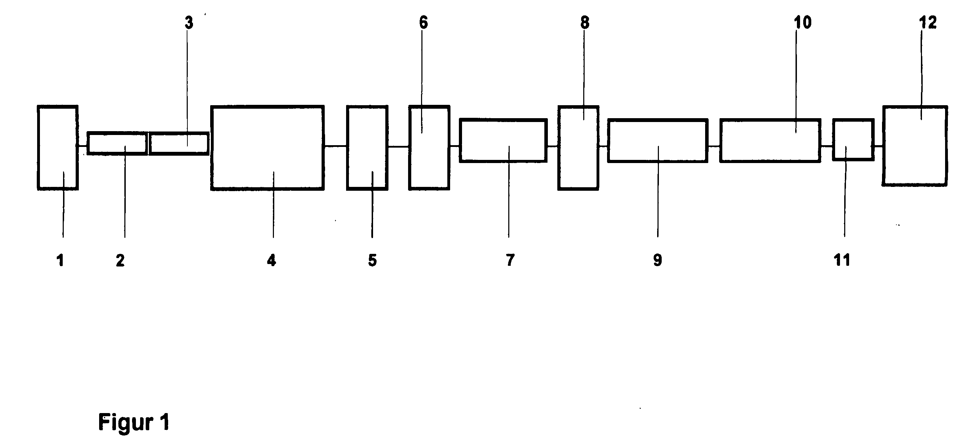

Die Figur 1 zeigt den prinzipiellen Aufbau einer Inline-Fertigungskette zur Durchführung des erfindungsgemäßen Verfahrens.

Als Ausgangsmaterial werden warmgewalzte, zunderfreie Stäbe in Vergütungsstahlqualität eingesetzt. Da erfindungsgemäß der gesamte Wärmebehandlungsprozess induktiv erfolgt und die Stäbe deshalb nur einer geringen Zunderbildung ausgesetzt sind, kann die gute Oberflächenqualität des Ausgangsmaterials über die gesamte Prozesslänge beibehalten werden. Diese Vorteile bewirken im weiteren Fertigungsablauf einen verminderten Verarbeitungsaufwand, höhere Arbeitsproduktivität und geringere Werkstoffverluste.

Die eingesetzten Stäbe werden durch Schnellerwärmung in einer induktiven Erwärmungseinheit 1 auf Umformtemperatur aufgeheizt. Dabei erfolgt die Bestimmung der optimalen Umformtemperatur mit Hilfe des Prozessmodells. In einem der induktiven Erwärmungseinheit 1 nachgeschalteten elektrischen Ausgleichsofen 2 erfolgt über eine Zeit von ca. 20 s ein Ausgleich der Aufheiztemperatur über die Länge der Stäbe. Um die Temperatur der Stäbe bis zum Eintritt in den Walzspalt des 3-Walzen-Schrägwalz gerüstes 4 konstant zu halten, ist zwischen dem Ausgleichsofen 2 und dem Walzgerüst 4 ein Halteofen 3 angeordnet.

Auf Grund des geringen Platzbedarfes und seiner einfachen Arbeitsweise verleiht das 3-Walzen-Schrägwalzgerüst der Fertigungslinie ein hohes Maß an Flexibilität. In bestimmten Durchmesserbereichen können unabhängig vom Durchmesser des eingesetzten Ausgangsmaterials beliebige Fertigdurchmesser ohne jegliche Umrüstvorgänge auf einem solchen Gerüst gewalzt werden. Die im Winkel von 120 ° zueinander angeordneten Walzenkörper des Gerüstes sind axial und/oder radial ansteuerbar und somit kann der Walzspalt mühelos auf den gewünschten, endkontumahen Durchmesser eingestellt werden. Mit der Integration der Schrägwalztechnik in die Fertigungslinie wird der mechanische Bearbeitungsaufwand, mit Ausnahme eines geringen Schleifaufmaßes, in optimaler Weise vom teuren, zerspanenden Umformen zum wesentlich wirtschaftlicheren spanlosen Schrägwalzen verschoben.

Die auf Umformtemperatur aufgeheizten Stäbe werden im 3-Walzen-Schrägwalzgerüst in einem Walzschritt auf den gewünschten, endabmessungsnahen Fertigdurchmesser derart umgeformt, dass der kritische Umformgrad überschritten wird und dadurch im Umformgut ein dynamischer Rekristallisationsprozess einsetzt.

Vorteilhaft ist, dass beim Schrägwalzen durch Auswahl des Umformgrades und der nachfolgenden Temperaturführung der Anteil des rekristallisierten Gefüges und dessen Korngröße gezielt eingestellt werden können. So wird zum Beispiel im Rahmen der nachfolgenden Temperaturführung in einer dem Gerüst nachgeordneten Kühl- und Temperaturhalteeinrichtung 5 durch gezieltes Zwischenkühlen und Halten im Umwandlungsbereich die Feinkombildung unterstützt.

Zur Einstellung eines geforderten Festigkeits-/Zähigkeits-Verhältnisses werden die gewalzten Stäbe nachfolgend einem Wärmebehandlungsprozess, dem Vergüten, unterzogen. Das Vergüten erfolgt energiesparend unter unmittelbarer Ausnutzung der Umformwärme, indem die gewalzten Stäbe in einer der Kühl- und Halteeinrichtung 5 nachgeschalteten induktiven Nachwärmeeinheit 6 auf Temperaturen oberhalb Ac3 nachgewärmt werden.

Das durch Umformung und nachfolgende Temperaturführung erzielte Feinkorngefüge führt in diesem Nachwärmprozess zur Ausbildung feinkörnigen Austenits, der als Ausgangsgefüge für den Vergütungsprozess sehr vorteilhaft ist.

Erwärmungstemperatur und Haltezeit werden in Abhängigkeit von der chemischen Analyse des Stabwerkstoffes sowie von den vorgegebenen Eigenschaftskennwerten mit Hilfe des Prozessmodells berechnet.

In Weiterführung des Vergütungsprozesses werden die Stäbe anschließend mit einer vom Prozessrnodell berechneten Abkühlgeschwindigkeit in einer Durchlaufhärteanlage 7 mit Öl oder Wasser gezielt abgeschreckt und danach in einer induktiven Erwärmungseinheit 8 auf Anlasstemperatur erwärmt. Die Abkühlung der angelassenen Stäbe auf Raumtemperatur erfolgt auf einem Kühlbett 9.

Beim erfindungsgemäßen Verfahren werden sowohl der Aufheizvorgang auf Umformtemperatur als auch die Wärmebehandlungsstufen im Rahmen des Vergütungsprozesses in Induktionsanlagen durchgeführt. Durch den Wegfall konventioneller Ofentechnik ist die gesamte Wärmebehandlungsstufe sehr platzsparend ausgelegt und sie bietet somit beste Voraussetzungen zur Integration in Inline-Fertigungsketten. Mit dem Einsatz von Induktionsanlagen sind ferner kürzere Durchlaufzeiten, höhere Prozessflexibilität, geringere Produktionskosten und die Möglichkeit eines kontinuierlichen Fertigungsablaufes verbunden. Für den erfindungsgemäßen Verfahrensablauf ist darüber hinaus von größter Bedeutung, dass mit der induktiven Erwärmung nur eine relativ geringe Verzunderung des Wärmegutes einhergeht und somit die sauberen Oberflächen des Einsatzmaterials bis zur zerspanenden Endbearbeitung erhalten bleiben.

Die auf Raumtemperatur abgekühlten Stäbe werden in einer Stauchrichtanlage 10 gerichtet und anschließend in der Konfektionierung 11 auf Endlänge gesägt. Durch den Richtprozess werden die Eigenspannungen des zu richtenden Materials weitestgehend abgebaut und dadurch Geradheit sowie Rundlaufeigenschaften der warmgewalzten und vergüteten Stäbe in einem Maße verbessert, dass für die Endbearbeitung in schnelllaufenden Schleif- und/oder Fräsautomaten eine hohe Prozesssicherheit gegeben ist. Erfindungsgemäß wird das Richten in einem Stauchrichtverfahren durchgeführt, weil bei dieser Technologie unterschiedliche Richtgutlängen problemlos kontinuierlich bearbeitet werden können und somit ein steter Materialfluss bis zur Endbearbeitung gewährleistet wird.

In einer Fertigbearbeitungszelle 12 werden die gerichteten und konfektionierten Stäbe z.B. durch Einbringen von Verzahnungen mittels Fräsens und/oder durch eine Oberflächenbearbeitung mittels Schleifens zu Bauteilkomponenten endbearbeitet Die zu bearbeitenden Stäbe werden in der gesamten Fertigungslinie mittels Rollgängen, die in der Prinzipskizze der Figur 1 nicht gezeigt werden, transportiert.

### Bezugszeichenliste

- 1: Induktive Erwärmungseinheit
- 2: Ausgleichsofen
- 3: Halteofen
- 4: 3-Walzen-Schrägwalzgerüst
- 5: Kühl- und Temperaturhalteeinrichtung
- 6: Induktive Nachwärmeeinheit
- 7: Durchlaufhärteanlage
- 8: Induktive Erwärmungseinheit
- 9: Kühlbett
- 10: Stauchrichtanlage
- 11: Konfektionierung
- 12: Fertigbearbeitungszelle

## Patentansprüche

1. Verfahren zum Inline-Umformen, -Vergüten, und -Richten von stabförmigen Metallteilen für die Herstellung hochbelasteter Bauteilkomponenten der Kraftfahrzeugindustrie, **dadurch gekennzeichnet, dass** die folgenden Verfahrensschritte,
1.1 Induktives Schnellaufheizen des stabförmigen Ausgangsmaterials auf Umformtemperatur mit nachfolgendem Temperaturausgleich über die Stablänge und Halten der Temperatur bis zum Einlauf des Stabes in den Walzspalt,
1.2 Warmumformung der Stäbe auf endabmessungsnahen Fertigdurchmesser in einem Umformschritt,
1.3 Gezieltes Zwischenkühlen der umgeformten Stäbe und Halten im Umwandlungsbereich,
1.4 Induktive Schnellnachwärmung der umgeformten Stäbe auf eine Temperatur oberhalb Ac3,
1.5 Abschrecken der Stäbe,
1.6 Induktive Schnellerwärmung der Stäbe auf Anlasstemperatur,
1.7 Abkühlung der angelassenen Stäbe auf Raumtemperatur,
1.8 Richten der vergüteten Stäbe,
1.9 Konfektionierung der Stäbe auf Fertigmaßlänge,
1.10 Endbearbeitung der Stäbe durch Fräsen und/oder Schleifen,
integrierte Bestandteile einer Inline-Fertigungslinie sind.

2. Verfahren nach Anspruch 1, **dadurch gekennzeichnet, dass** die technologischen Parameter des Vergütungsprozesses mit Hilfe eines Prozessmodells vorausberechnet und für die Steuerung der Vergütungsanlage zur gezielten Einstellung geforderter mechanischer Kennwerte der Stäbe eingesetzt werden.

3. Verfahren nach Anspruch 1, **dadurch gekennzeichnet, dass** die Warmumformung der Stäbe durch Schrägwalzen in einem Umformschritt erfolgt.

4. Verfahren nach Anspruch 3, **dadurch gekennzeichnet, dass** beim Schrägwalzen nach Überschreitung des kritischen Umformgrades dynamische Rekristallisationsprozesse ablaufen, in deren Folge ein feinkörniges Austenitgefüge entsteht.

5. Verfahren nach Anspruch 3, **dadurch gekennzeichnet, dass** beim Schrägwalzen durch Auswahl des Umformgrades und der nachfolgenden Temperaturführung der Anteil des rekristallisierten Gefüges und dessen Korngröße gezielt eingestellt werden.

6. Verfahren nach Anspruch 3, **dadurch gekennzeichnet, dass** beim Schrägwalzen der Walzspalt durch axiales und/oder radiales Ansteuern der Walzenkörper auf beliebige, endabmessungsnahe Fertigdurchmesser eingestellt wird.

7. Verfahren nach einem oder mehreren der Ansprüche 1 bis 6, **dadurch gekennzeichnet, dass** der Vergütungsprozess der Stäbe energiesparend unter Ausnutzung der Umformwärme erfolgt und dass das Ausgangsgefüge für den Vergütungsprozess feinkörniger Austenit ist.

8. Verfahren nach einem oder mehreren der Ansprüche 1 bis 8, **dadurch gekennzeichnet, dass** das Abschrecken der Stäbe in einer Durchlaufhärteanlage durch Öl oder Wasser erfolgt.

9. Verfahren nach einem oder mehreren der Ansprüche 1 bis 9, **dadurch gekennzeichnet, dass** die Abkühlung der angelassenen Stäbe auf Raumtemperatur auf einem Kühlbett erfolgt.

10. Verfahren nach einem oder mehreren der Ansprüche 1 bis 10, **dadurch gekennzeichnet, dass** als Ausgangsmaterial warmgewalzte, zunderfreie Stäbe in Vergütungsstahlqualität eingesetzt werden.

11. Verfahren nach einem oder mehreren der Ansprüche 1 bis 11, **dadurch gekennzeichnet, dass** das Richten der auf Raumtemperatur abgekühlten Stäbe in einem kontinuierlich ablaufenden Stauchrichtprozess erfolgt.

12. Verfahren nach einem oder mehreren der Ansprüche 1 bis 12, **dadurch gekennzeichnet, dass** durch das endkontumahe Schrägwalzen nur ein Minimum an Zerspanungsarbeit in der zerspanenden Endbearbeitung erforderlich ist.

13. Anlage zur Durchführung des Verfahrens nach Anspruch 1, **dadurch gekennzeichnet, dass** die folgenden Anlagenkomponenten induktive Erwärmungseinheit 1, Ausgleichsofen 2, Halteofen 3, 3-Walzen-Schrägwalzgerüst 4, Kühl- und Temperaturhalteeinrichtung 5, induktive Nachwärmeeinheit 6, Durchlaufhärteanlage 7, induktive Erwärmungseinheit 8, Kühlbett 9, Stauchrichtanlage 10, Konfektionierung 11 und Fertigbearbeitungszelle 12 in einer kontinuierlich arbeitenden und geschlossenen Fertigungslinie integriert sind.

## Claims

1. A method for inline forming, quenching and tempering and straightening of rod-shaped metal parts for the manufacture of part components of the automotive industry which undergo high load, **characterised in that** the following method steps are integrated components of an inline production line:
1.1 inductive rapid heating of the rod-shaped starting material to the forming temperature, with subsequent temperature equalisation over the rod length and maintenance of the temperature until the rod enters the roll gap,
1.2 heat forming of the rods to a finished diameter approximating to the final dimensions, in a forming step,
1.3 controlled intermediate cooling of the formed rods, and holding in the transformation range,
1.4 inductive rapid re-heating of the formed rods to a temperature above Ac3,
1.5 quenching of the rods,
1.6 inductive rapid heating of the rods to the tempering temperature,
1.7 cooling of the tempered rods to room temperature,
1.8 straightening of the quenched and tempered rods,
1.9 finishing of the rods to the finished length,
1.10 final machining of the rods by milling and/or grinding.

2. A method according to Claim 1, **characterised in that** the technological parameters of the quenching and tempering process are calculated beforehand using a process model and are used for controlling the heat-treatment plant for controlled adjustment of the required mechanical characteristics of the rods.

3. A method according to Claim 1, **characterised in that** heat forming of the rods is carried out by cross rolling in one forming step.

4. A method according to Claim 3, **characterised in that** during the cross rolling, once the critical degree of forming is exceeded, dynamic recrystallisation processes take place, as a result of which a fine-grained austenite structure is produced.

5. A method according to Claim 3, **characterised in that** during the cross rolling, by selecting the degree of forming and the subsequent temperature profile, the proportion of the recrystallised structure and its grain size are adjusted in a controlled manner.

6. A method according to Claim 3, **characterised in that** during the cross rolling, the roll gap is adjusted by axial and/or radial control of the roll bodies to give any desired finished diameters approximating to the final dimensions.

7. A method according to one or more of Claims 1 to 6, **characterised in that** the process of quenching and tempering the rods is performed in energy-saving manner, utilising the heat from forming, and **in that** the starting structure for the quenching and tempering process is fine-grained austenite.

8. A method according to one or more of Claims 1 to 8, **characterised in that** quenching of the rods is performed by oil or water in a continuous hardening plant.

9. A method according to one or more of Claims 1 to 9, **characterised in that** cooling of the tempered rods to room temperature is performed on a cooling bed.

10. A method according to one or more of Claims 1 to 10, **characterised in that** the starting material used is hot-rolled, scale-free rods of a quality suitable for heat treatable steel.

11. A method according to one or more of Claims 1 to 11, **characterised in that** straightening of the rods that have been cooled to room temperature is performed in a continuously operating compression straightening process.

12. A method according to one or more of Claims 1 to 12, **characterised in that** as a result of the cross rolling approximating to the final contour only a minimum of machining work is required in the final machining.

13. A plant for carrying out the method according to Claim 1, **characterised in that** the following plant components are integrated in a continuously operating and closed production line: inductive heating unit 1, equalising furnace 2, holding furnace 3,
three-roll cross rolling stand 4, cooling and temperature-maintaining means 5, inductive re-heating unit 6, continuous hardening plant 7, inductive heating unit 8, cooling bed 9, compression straightening plant 10, finishing 11 and finish machining bay 12.

## Revendications

1. Procédé de déformation, de trempe et revenu, et de dressage en ligne de pièces métalliques en forme de barres pour la fabrication de composants de l'industrie automobile soumis à des contraintes élevées, **caractérisé en ce que** les étapes de procédé suivantes :
1.1 chauffage par induction rapide du matériau initial en forme de barre à température de déformation, avec équilibrage thermique consécutif sur la longueur de barre et maintien de température jusqu'à l'admission de la barre dans l'entrefer,
1.2 déformation à chaud des barres au diamètre de finition proche des dimensions finales, en une seule étape de déformation,
1.3 refroidissement intermédiaire défini des barres déformées et maintien dans la plage de transformation,
1.4 post-chauffage par induction rapide des barres déformées à température supérieure à Ac3,
1.5 trempe des barres,
1.6 chauffage par induction rapide des barres à température de revenu,
1.7 refroidissement des barres revenues à température ambiante,
1.8 dressage des barres trempées et revenues,
1.9 confection de barres à la longueur finale,
1.10 usinage final des barres par fraisage et/ou par rectification,
sont des parties intégrantes d'une chaîne de fabrication en ligne.

2. Procédé selon la revendication 1, **caractérisé en ce que** les paramètres technologiques du processus de trempe et revenu sont préalablement calculés au moyen d'un modèle de processus et exploités pour la commande de l'installation de trempe et revenu en vue du réglage défini des valeurs caractéristiques mécaniques exigées pour les barres.

3. Procédé selon la revendication 1, **caractérisé en ce que** la déformation à chaud des barres est effectuée par laminage à cylindres obliques en une seule étape de déformation.

4. Procédé selon la revendication 3, **caractérisé en ce que**, lors du laminage à cylindres obliques, des processus de recristallisation ont lieu après dépassement du degré de déformation critique, à la suite desquels se forme une structure austénitique à grain fin.

5. Procédé selon la revendication 3, **caractérisé en ce que**, lors du laminage à cylindres obliques, la part de la structure recristallisée et la dimension des grains de celle-ci sont réglés de manière définie par sélection du degré de déformation et du suivi de température consécutif.

6. Procédé selon la revendication 3, **caractérisé en ce que**, lors du laminage à cylindres obliques, l'emprise est réglée par commande axiale et/ou radiale des corps de cylindre à des diamètres de finition quelconques, proches des dimensions finales.

7. Procédé selon l'une ou plusieurs des revendications 1 à 6, **caractérisé en ce que** le processus de trempe et revenu des barres est effectué de manière économe en énergie en exploitant la chaleur de déformation, et **en ce que** la structure initiale pour le processus de trempe et de revenu est de l'austénite à grain fin.

8. Procédé selon l'une ou plusieurs des revendications 1 à 8, **caractérisé en ce que** la trempe des barres est effectuée dans une installation de trempe continue par huile ou par eau.

9. Procédé selon l'une ou plusieurs des revendications 1 à 9, **caractérisé en ce que** le refroidissement des barres revenues à température ambiante est effectué sur un poste de refroidissement.

10. Procédé selon l'une ou plusieurs des revendications 1 à 10, **caractérisé en ce que** des barres laminées à chaud et exemptes de calamine dans une qualité d'acier à trempe et revenu sont utilisées comme matériau initial.

11. Procédé selon l'une ou plusieurs des revendications 1 à 11, **caractérisé en ce que** le dressage des barres refroidies à température ambiante est effectué en un seul processus continu de dressage par refoulement.

12. Procédé selon l'une ou plusieurs des revendications 1 à 12, **caractérisé en ce que** le laminage à cylindres obliques à un contour proche du contour final ne rend nécessaire qu'un enlèvement de copeaux minimal lors de l'usinage final par enlèvement de copeaux.

13. Installation pour l'exécution du procédé selon la revendication 1, **caractérisée en ce que** les composants d'installation suivants : unité de chauffage par induction 1, four d'équilibrage 2, four de maintien 3, cage de laminoir à 3 cylindres obliques 4, dispositif de refroidissement et de maintien de température 5, unité de post-chauffage par induction 6, installation de trempe continue 7, unité de chauffage par induction 8, poste de refroidissement 9, installation de dressage par refoulement 10, confection 11 et cellule de finition 12 sont intégrés dans une chaîne de fabrication fermée, à fonctionnement continu.
